# EUROPEAN PATENT APPLICATION

(11) **EP 4 632 123 A1**
(43) Date of publication of application: **15.10.2025**
(21) Application number: 24903938.9
(22) Date of filing: 22.10.2024
(51) Int. Cl.: D01F 1/10, E01C 13/08, D01F 6/04, D02G 3/44, D01D 5/08

(54) **ARTIFICIAL TURF STRUCTURE HAVING EXCELLENT ANTIBACTERIAL, IMPACT-ABSORBING AND DRAINAGE PROPERTIES AND METHOD FOR MANUFACTURING SAME**

(30) Priority: 14.12.2023 KR 20230181851; 07.02.2024 KR 20240018816
(71) Applicant: Biland.Co., Ltd, Jecheon-si, Chungcheongbuk-do 27116 (KR)
(72) Inventor: CHANG, Suk Won, Seoul 08016 (KR)
(74) Representative: BCKIP Part mbB
(86) International application number: PCT/KR2024/016021
(87) International publication number: WO 2025/127371

(57) **Abstract**

The present invention is directed to an artificial turf pile yarn, an artificial turf structure, and a method for manufacturing the same. According to the present invention, an artificial turf structure having excellent antibacterial properties, shock resistance properties, and drainage properties may be provided by adding antibacterial materials to an artificial turf pile yarn and applying a shock-absorbing drainage board having excellent shock resistance and drainage properties.

## Description

### Technical Field

The present invention relates to an artificial turf structure having excellent antimicrobial properties, shock absorption properties, and drainage properties, and a method for manufacturing the same.

### Background Art

Artificial turf has been developed primarily for use in areas where natural lighting is difficult or where natural grass growth is difficult due to climate conditions. Although the initial installation cost of artificial turf is higher than that of natural grass, artificial turf has advantages in that it is easy to maintain and has an even surface, so that there are many cases where artificial turf is installed and used as a space for exercise even in areas where natural grass can grow.

Drainage is a very important factor in the use of artificial turf. In the case where it rains, if the drainage is not proper, water may accumulate on the artificial turf piles, which may cause users to slip and get injured, and the durability of the artificial turf may be reduced, resulting in economic costs. In addition, when installing artificial turf, water may accumulate inside and around the drainage board, creating an environment in which microorganisms can grow, and a foul odor may be generated due to the breeding of bacteria and insects.

In addition, artificial turf fields are highly contaminated due to human sweat from intense exercise, pet excretions, and contaminants such as drinks. In order to prevent the occurrence of pathogens caused by these contaminants and to maintain continuous hygiene, it is important to maintain a pleasant environment by adding a composite antimicrobial agent to the turf pile when manufacturing artificial turf.

However, in the development of artificial turf that is currently underway, most attempts have been made to lower the friction temperature or reduce the rigidity of the piles by manufacturing the piles with soft synthetic resins in order to maintain the same performance as natural artificial grass, and functional processing to impart an antimicrobial or sterilizing function to artificial turf is insufficient.

Accordingly, the present invention is intended to develop an artificial turf with antimicrobial or sterilizing properties beneficial to humans and pets, thereby providing convenience and comfort in use, and to develop a shock-absorbing drainage board with excellent shock absorption and drainage properties, thereby developing an artificial turf structure with an antimicrobial function that may suppress the growth of microorganisms.

### Disclosure

### Technical Problem

The inventors of the present invention have produced an antimicrobial pile yarn for artificial turf containing paeonol and zinc oxide, and then, have found that the pile yarn has excellent antimicrobial effects against *Escherichia coli, Staphylococcus aureus, Klebsiella pneumoniae,* and *Pseudomonas aeruginosa.* In addition, the present inventors have found that, when are air holes are arranged in a V-shape on the upper and lower surfaces of a drainage board, the drainage board has excellent shock absorption properties, elasticity (elongation), and durability (tensile strength), thereby completing the present invention.

Therefore, a specific object of the present invention is to provide an antimicrobial pile yarn for artificial turf.

Another specific object of the present invention is to provide an artificial turf structure including a pile made of the antimicrobial pile yarn for artificial turf.

Still another specific object of the present invention is to provide a method for producing the antimicrobial file yarn for artificial turf.

Yet another specific object of the present invention is to provide a method for manufacturing an artificial turf structure using the antimicrobial file yarn for artificial turf.

### Technical Solution

Hereinafter, the present specification will be described in more detail.

This is described in detail as follows. Each description and embodiment disclosed in the present invention may also be applied to other descriptions and embodiments. That is, all combinations of the various components disclosed in the present invention fall within the scope of the present invention. In addition, the scope of the present invention cannot be construed as being limited by the specific descriptions described below.

As used herein, expressions such as ┌containing┘ or ┌including┘ should be understood as open-ended terms implying the possibility of including other embodiments, unless stated otherwise in phrases and sentences including the expressions.

The terms and words used in the specification and claims should not be interpreted as being limited to typical meanings or dictionary definitions, but should be interpreted as having meanings and concepts relevant to the technical scope of the present invention, based on the principle according to which the inventor can appropriately define the concept of the terms to describe his/her invention in the best manner.

### Pile Yarn for Artificial Turf

The present invention provides an antimicrobial pile yarn for artificial turf, including 77 to 96 wt% of a polyethylene resin, 1 to 10 wt% of a light stabilizer, 1 to 5 wt% of calcium carbonate, and 2 to 8 wt% of a composite antimicrobial agent composed of paeonol and zinc oxide.

The antimicrobial pile yarn for artificial turf according to the present invention includes 77 to 96 wt% of polyethylene resin, 1 to 10 wt% of a light stabilizer, 1 to 5 wt% of calcium carbonate, and 2 to 8 wt% of a composite antimicrobial agent composed of paeonol and zinc oxide.

The polyethylene resin of the pile yarn for artificial turf may be used in an amount of 77 to 96 wt%, and has a density of 0.91 to 0.97 g/cm³, and a melt index (MI) of 5 to 15 g/10 min.

The light stabilizer may be any one selected from the group consisting of benzophenone, benzotriazole, and hindered amine, without being limited thereto.

In addition, the light stabilizer may be used in an amount of 1 to 10 wt%, and may be a hindered amine light stabilizer. Examples of the hindered amine light stabilizer include, but are not limited to, Chimassorb (registered trademark) 944FDL, Chimassorb 2020FDL, and the like.

The calcium carbonate may be used in an amount of 1 to 5 wt% and may serve to increase the weight of the flat yarn. In addition, it is used in small amounts to prevent blocking and serves to facilitate the supply of the flat yarn in a subsequent knitting process.

The complex antimicrobial agent is a complex antimicrobial agent composed of paeonol and zinc oxide and may be used in an amount of 2 to 8 wt%. Paeonol is a natural antimicrobial agent isolated from Moutan root bark.

The composite antimicrobial agent may be a mixture of paeonol isolated from Moutan root bark and zinc oxide at a weight ratio of 0.3 to 5:1.

In addition, the antimicrobial pile yarn for artificial turf may further include at least one functional additive selected from the group consisting of a pigment, a flame retardant, an antioxidant, and an anti-aging agent.

The functional additive may be included in an amount of 0.1 to 10 wt%. If the content of the functional additive is less than 0.1 wt%, the effect thereof is insufficient, and if the content of the functional additive is more than 10 wt%, there is a problem in that the additives are not properly mixed and the dimensional stability deteriorates.

The pigment is not limited as long as it can give artificial turf a color similar to natural grass, but yellow pigment, green pigment, and black pigment may be mixed and used within an appropriate range to give color.

The flame retardant may be any one selected from the group consisting of phosphorus-based flame retardants, metal hydroxide flame retardants, halogen-based flame retardants, flame retardant aids, and mixtures thereof, without being limited thereto.

The antioxidant serves to prevent artificial turf from being denatured by heat and to improve heat resistance, and a conventional antioxidant may be used.

The anti-aging agent serves to prevent artificial turf from aging due to solar heat, and a conventional anti-aging agent may be used.

The pile yarn for artificial turf has antimicrobial effects, and in particular, has excellent antimicrobial effects against *Escherichia coli, Staphylococcus aureus, Klebsiella pneumoniae,* and *Pseudomonas aeruginosa.*

### Artificial Turf Structure

The present invention provides an artificial turf structure, including: a foam layer; an artificial turf pile tufted into the foam layer and composed of the pile yarn for artificial turf; and a support layer formed by coating the lower surface of the foam layer with a polymer resin.

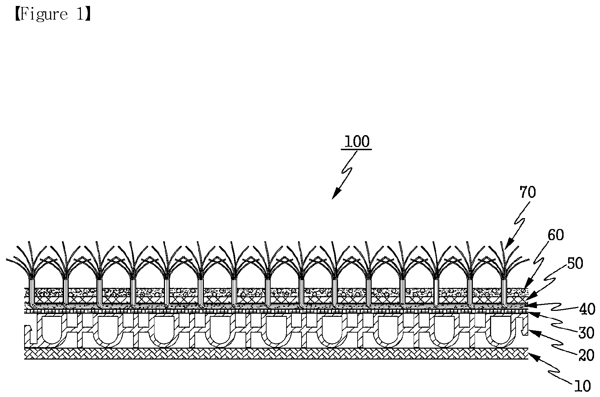

FIG. 1 illustrates an installation section of an artificial turf structure of the present invention. An artificial turf structure 100 of the present invention has a structure in which an adhesive layer 30, a support layer 40, a foam layer 50, a filler layer 60, and an artificial turf pile 70 are sequentially stacked on a drainage board 20 disposed on a ground 10.

In this case, the ground 10 is formed as a base layer by compacting soil or sand on a gravel layer for artificial turf installation. In addition, in the present invention, the ground 10 may be constructed with concrete or wood depending on the characteristics of the space for installation.

The artificial turf structure of the present invention includes: a foam layer; an artificial turf pile tufted into the foam layer and formed by processing a pile yarn for artificial turf having the above-described composition; and a support layer formed by coating the lower surface of the foam layer with a polymer resin.

The foam layer 50 is a part that fixes the artificial turf pile 70 and may be composed of a polyolefin-based material. The foam layer 50 is formed of polyester, polypropylene, or a mixture thereof, and may be made water-permeable.

The artificial turf pile 70 is tufted into the foam layer 50.

The artificial turf pile 70 is manufactured by processing the pile yarn for artificial turf having the above-described composition.

The support layer 40 may be formed on the lower surface of the foam layer 50 into which the artificial turf pile 70 is tufted, and serves to support the foam layer 50. The polymer resin forming the support layer 40 may be at least one selected from the group consisting of polyethylene, polyester, polyamide, and mixtures thereof. In addition, it may be a thermoplastic elastomer (TPE) or a thermoplastic polyolefin (TPO).

The support layer 40 may be formed on the lower surface of the foam layer 50, into which the artificial turf pile is tufted, by a dry heat bonding method or by a latex coating method, without being limited thereto. In addition, a silica sand layer may also be formed on the upper surface of the foam layer 50, and the silica sand layer may include silicon dioxide (SiO₂) and may have a particle size of about 0.3 to 1.0 mm, without being limited thereto. In addition, the silica layer may be formed to a thickness of about 15 to 30 mm.

In addition, as shown in FIG. 1 of the present invention, the artificial turf structure 100 may include a filler layer 60 made of a filler on the upper surface of the foam layer 50 or on the upper surface of the silica sand layer, if any, to provide cushioning function. The filler layer 60 may be formed of particles having a size of 1.4 to 3.35 mm to improve drainage properties and enhance cushioning function.

In addition, the artificial turf structure may further include: an adhesive layer connecting the lower surface of the support layer to the upper surface of a drainage board; and the drainage board attached to the lower surface of the adhesive layer.

In order to connect the lower surface of the support layer 40 to the upper surface of the drainage board 20, an adhesive layer 30 made of an adhesive may be formed on the lower surface of the support layer 40. By attaching the upper surface of the drainage board 20 to the lower surface of the adhesive layer 30, the drainage board 20 is firmly bonded. When forming the adhesive layer 30 on the lower surface of the support layer 40, it is important to form the adhesive layer 30 only on the edge portion and not on the entire area of the lower surface of the support layer 40 so that air holes 230 of the drainage board 20 are not covered.

In addition, the upper surface of the drainage board 20 is attached to the lower surface of the adhesive layer 30 not to be separated by a load. In this case, it is sufficient if the edge portion (outer portion) of the drainage board 20 is bonded to the support layer 40 so that the air holes 230 of the drainage board 20 are not blocked by the adhesive layer 30.

The adhesive constituting the adhesive layer 30 is intended to bond the support layer 40 to the drainage board 20, and a conventional adhesive may be used as the adhesive.

The drainage board has a plurality of air holes formed in a first horizontal member forming an upper surface of the drainage board and a second horizontal member forming a lower surface of the drainage board, wherein the plurality of holes may be arranged in a V-shape, and has a structure in which a plurality of V shapes are repeated.

In addition, the drainage board may include a plurality of ventilation layers and a support member connecting the ventilation layers to each other, wherein the ventilation layer may include: a first horizontal member forming an upper surface of the drainage board; a second horizontal member forming a lower surface of the drainage board; a first vertical member connecting one end of the first horizontal member to one end of the second horizontal member; and a second vertical member connecting the other end of the first horizontal member to the other end of the second horizontal member.

FIG. 2 illustrates an upper surface 21 of the drainage board of the present invention.

FIG. 4 is an enlarged view of the ventilation layer 250 and support member 260 of the drainage board of the present invention.

The drainage board 20 includes a first connecting portion 210, a second connecting portion 220, air holes 230, a guide groove 240, a ventilation layer 250, and a support member 260. The drainage board 20 includes a plurality of ventilation layers 250 and support members 260 continuously arranged in succession. The first connecting portion 210 is positioned on one end of the drainage board 20 and the second connecting portion 220 is positioned on the other end. Due to the presence of the ventilation layers 250, drainage and air flow are facilitated.

The artificial turf structure 100 of the present invention absorbs shock by a structure including the plurality of ventilation layers 250 in the shape of the drainage board 20 and the support member 260 connecting the ventilation layers 250 to each other. In addition, the plurality of air holes 230 formed in the ventilation layers 250 facilitate vertical drainage and air flow. When pressure (load) is applied from the top of the artificial turf pile 70, the shape of the ventilation layers 250 may be deformed in response to the load, indicating that the artificial turf structure has shock resistance.

The drainage board 20 of the present invention has a tubular structure and has excellent drainage properties, and thus it may be simply installed without needing to bury a separate civil engineering perforated pipe, and may reduce the cost of foundation installation when installing the artificial turf structure.

The support member 260 having a cross structure distribute a horizontal load, and the ventilation layer 250 having a tubular structure acts as a strong structure that supports a load, and thus the drainage board 20 of the present invention has excellent strength and stability. The tubular structure in the form of a curve has a high resilience because it has an elastic structure that reduces the pressure, which is a disadvantage of a square structure with a vertex. In addition, the cross structure of the support member 260 may secure space inside the guide groove 240, which facilitates ventilation and drainage, thereby preventing contamination and bad odor.

The plurality of air holes 230 located in the upper surface of the drainage board 20 are characterized by being arranged in a V-shape. When the plurality of air holes 230 are arranged in a V-shape, the drainage board has excellent durability compared to a drainage board structure in which a plurality of air holes are arranged in a " 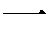 " shape parallel to the horizontal members 251 and 252. When the plurality of air holes are arranged in a " 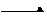 " shape parallel to the horizontal members 251 and 252, the drainage board is easily damaged by being torn or burst due to a load (pressure).

The drainage board 20 is a soft plastic molded body, may have, as a main material, polyethylene (PE), polypropylene (PP), polystyrene (PS), polyvinyl chloride (PVC), polyurethane (PU), polystyrene (SB), acrylonitrile butadiene styrene resin (ABS), polyamide (PA), polycarbonate (PC), polyethylene terephthalate (PET), polybutylene terephthalate (PBT), or a mixture of two or more thereof, and may be manufactured by extrusion molding of a composite material obtained by adding a plasticizer to the main material to impart softness.

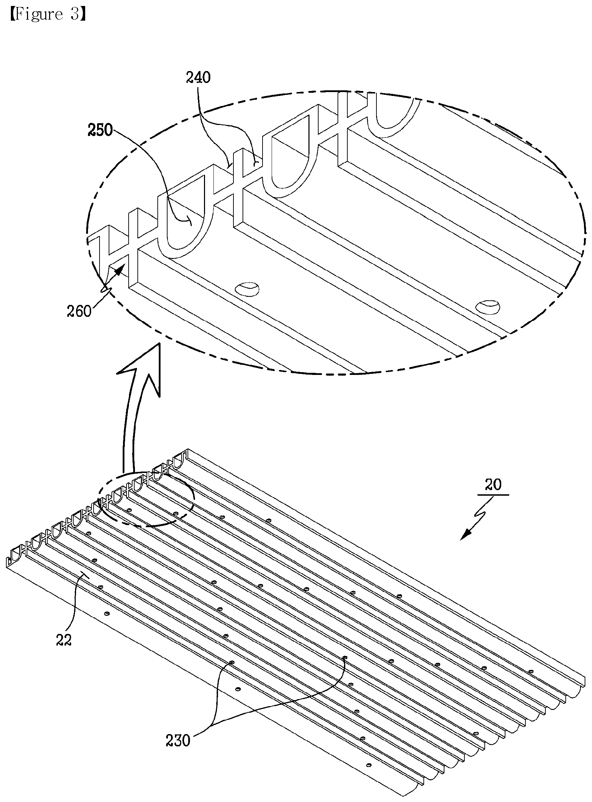

FIG. 3 illustrates a lower surface 22 of the drainage board of the present invention.

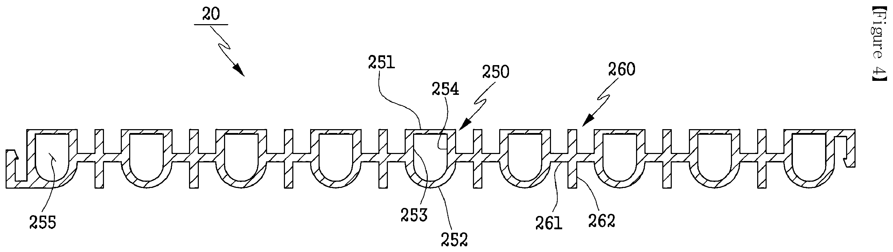

FIG. 4 is an enlarged view of the ventilation layers 250 and support members 260 of the drainage board of the present invention.

The lower surface of the drainage board 20 also has air holes 230 formed in the second horizontal member 252 of the ventilation layer 250, which facilitate vertical drainage and air flow. The plurality of air holes 230 formed in the first horizontal member 251 and second horizontal member 252 constituting the ventilation layer 250 enable vertical drainage because the air holes 230 formed in the first horizontal member 251 and the air holes 230 formed in the second horizontal member 252 are arranged to be vertically aligned with each other. Accordingly, the air holes 230 become passages for the inflow and outflow of water and/or air.

The ventilation layer 250 has a tubular (tube-shaped) structure in a curved shape, including a first horizontal member 251 forming the upper surface of the drainage board 20, a second horizontal member 252 forming the lower surface, a first vertical member 253 connecting one end of the first horizontal member 251 to one end of the second horizontal member 252, and a second vertical member 254 connecting the other end of the first horizontal member 251 to the other end of the second horizontal member 252.

The first horizontal member 251 and the second horizontal member 252 have a thickness that is smaller than or equal to that of the vertical members 253 and 254.

The first vertical member 253 and the second vertical member 254 serve as supports while being compressed in a vertical direction to the ground against pressure applied from above. Since the first horizontal member 251 and the second horizontal member 252 have a thickness that is smaller than or equal to that of the vertical members 253 and 254, they may have elasticity and cushioning properties while bending toward the inside of the ventilation layer 250 against pressure applied from above.

A plurality of ventilation layers 250 are each defined by the first horizontal member 251, the second horizontal member 252, the first vertical member 253, and the second vertical member 254. The plurality of ventilation layers 250 are arranged at positions spaced apart from each other. In addition, the ventilation layer 250 has an air layer 255 formed in the inner space thereof. A plurality of air layers 255 are formed like the ventilation layers 250, enable vertical drainages, and function as a passage through which air can move. In addition, the air layer 255 formed in the inner space of the ventilation layer 250 serves to absorb and cushion the shock of pressure applied from above.

The support member 260 includes a horizontal support member 261 and a vertical support member 262. The support member 260 connects two ventilation layers 250 arranged at spaced positions. One end of the horizontal support member 261 is connected to the second vertical member 254, and the other end of the horizontal support member 261 is connected to the first vertical member 253 of the ventilation layer 250 disposed at an adjacent position. The vertical support member 262 serves as a support while being compressed against a pressure (load) applied from above.

The support member 260 has a cross-shaped structure formed by intersecting the horizontal support member 261 and the vertical support member 262, and serves to evenly distribute the load.

In addition, the support member 260 has a guide groove 240 formed between the horizontal support member 261 and the vertical support member 262 to allow horizontal drainage and air movement therethrough. Since the guide groove 240 is lower than the level of the first horizontal member 251, drainage and air movement are possible even without a separate discharge portion with a perforated structure or a separate air hole. In addition, due to the surface gradient of the ground 10, plane/surface drainage is possible through the guide groove 240 formed in the cross structure of the support members 260.

The above guide groove 240 has a structure in which the horizontal support member 261 is divided into two by the vertical support member 262. If a perforated structure such as one having air holes is formed in the guide groove 240, the durability of the drainage board 20 is degraded and the elasticity thereof is reduced. In the case where the guide groove 240 has a perforated structure such as one having air holes, when a high pressure or load is applied to the drainage board 20, the restoring force is reduced and the shock resistance and durability are degraded due to the perforated structure, so that the guide groove 240 of the drainage board 20 is torn or easily damaged.

The drainage board 20 has a horizontal drainage function due to the inner space of the ventilation layer 250 and the guide groove 240, and has a vertical drainage function due to the air holes 230. In addition, the inner space of the ventilation layer 250, the guide groove 240, and the air holes 230 of the drainage board 20 serve as air movement passages.

The artificial turf structure 100 of the present invention generates an air flow by the movement of the drainage board 20 when pressure is applied to the top of the artificial turf pile 70, thereby rapidly drying the moisture in the drainage board 20 and the artificial turf pile 70 above the drainage board 20.

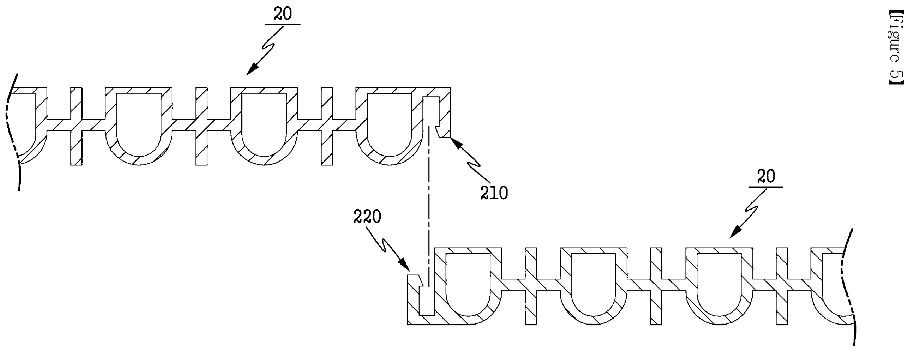

FIG. 5 illustrates the connection structure of the drainage board of the present invention.

In addition, the drainage board has a first connecting portion 210 formed at one end and a second connecting portion 220 formed at the other end. Thus, the drain board 20 has a male-female engaging structure so that a plurality of drain boards may be connected to each other in the width direction and detached from each other.

The first connecting portion 210 of the drainage board 20 is formed at one end of the drainage board 20. The second connecting portion 220 is formed on the other end of the drainage board 20. A lower protrusion and an insertion groove are formed in the first connecting portion 210, and an upper protrusion and an insertion groove are formed in the second connecting portion 220, so that the first connecting portion 210 and the second connecting portion 220 are attachable to each other and detachable from each other through a male-female fastening structure.

In addition, this structure may also be modified into a structure in which an upper protrusion and an insertion groove are formed in the first connecting portion 210 and a lower protrusion and an insertion groove are formed in the second connecting portion 220.

### Method for Producing Pile Yarn for Artificial Turf

The present invention provides a method for producing a pile yarn for artificial turf, including: a first step of preparing an antimicrobial master batch for producing an antimicrobial pile yarn for artificial turf, including 77 to 96 wt% of a polyethylene resin, 1 to 10 wt% of a light stabilizer, 1 to 5 wt% of calcium carbonate, and 2 to 8 wt% of a composite antimicrobial agent composed of paeonol and zinc oxide; and a second step of extruding the antibacterial master batch into a film and stretching the film, thereby producing a flat yarn.

The first step of the present invention is a step of preparing an antimicrobial master batch for producing an antimicrobial pile yarn for artificial turf, including 77 to 96 wt% of a polyethylene resin, 1 to 10 wt% of a light stabilizer, 1 to 5 wt% of calcium carbonate, and 2 to 8 wt% of a composite antimicrobial agent composed of paeonol and zinc oxide.

The first step of the present invention is a step of preparing an antimicrobial master batch form for producing an antimicrobial pile yarn for artificial turf, including 77 to 96 wt% of a polyethylene resin, 1 to 10 wt% of a light stabilizer, 1 to 5 wt% of calcium carbonate, and 2 to 8 wt% of a composite antimicrobial agent composed of paeonol and zinc oxide.

In the present invention, the descriptions of the terms "polyethylene resin," "light stabilizer," "calcium carbonate," and "composite antibacterial agent composed of paeonol and zinc oxide" are as described above.

The term "master batch" refers to a pellet-shaped raw material in which the basic plastic raw material and the additives to be added are highly concentrated and dispersed.

The present invention has the advantage of convenience because it prepares a mixture of raw materials constituting an antimicrobial pile yarn for artificial turf in the form of a master batch, and then melts the master batch when necessary to use the same in the manufacture of an artificial turf pile.

The second step of the present invention is a step of extruding the antibacterial master batch into a film and stretching the film, thereby producing a flat yarn.

Specifically, the second step may include a step of melting the antimicrobial master batch, prepared in the first step, at 250 to 350°C and extruding the melt into a film; a step of stretching the film at a stretching ratio of 1:5 to 15 at a speed of 80 m/min to 120 m/min at 95 to 120°C; and a step of producing a flat yarn having 5,000 to 20,000 dtex.

First, the antimicrobial master batch prepared in the first step 1 may be melted and extruded using an extruder such as a T-die at 250 to 350°C, specifically 280 to 320°C, to form a film.

The extruded film can be cooled to 25 to 40°C using a cooling tank or the like, and cut into an appropriate size using a slitter.

The extruded film may be stretched at a stretching ratio of 1:5 to 15 at a speed of 80 m/min to 120 m/min at 95 to 120°C. If the stretching temperature is lower than 95°C, workability will be poor, and if the stretching temperature exceeds 120°C, there will be a problem that the shape stability of the produced pile yarn deteriorates. Thus, the stretching may be performed within the above temperature range. In addition, if the stretching ratio is less than 5, dimensional stability will deteriorate, and the stretching ratio is more than 15, not only the stretchability deteriorates but also the touch becomes stiff, which is not preferable.

A flat yarn of 5,000 to 20,000 dtex may be produced from the stretched film.

The stretched film may be further annealed at 80 to 120°C, and then a flat yarn of 5,000 to 20,000 dtex may be produced therefrom.

The term "annealing" refers to a post-processing process performed to heat a molded polymer material to maintain the molded shape, and to prevent the molded material from becoming distorted due to rapid shrinkage or partial shrinkage of the rapidly cooled polymer material during crystallization of the polymer particles.

The annealing process after the stretching process may be omitted. After the stretching process, the yarn is wound on a winder, thereby producing a flat yarn of 5,000 to 20,000 dtex.

A pile yarn for artificial turf is manufactured by processing 2 to 12 strands, specifically 4 to 8 strands, of the produced flat yarn.

### Method for Manufacturing Artificial Turf Structure

The present invention also provides a method for manufacturing an artificial turf structure, including: a first step of tufting the produced pile yarn for artificial turf into a foam layer; a second step of coating the lower surface of the foam layer with a polymer resin to form a support layer; a third step of forming an adhesive layer on the lower surface of the support layer; and a fourth step of attaching the upper surface of a drainage board to the lower surface of the adhesive layer.

The first step of the method for manufacturing an artificial turf structure according to the present invention is a step of tufting the pile yarn for artificial turf into a foam layer.

The pile yarn for artificial turf produced by the above-described method is tufted into a foam layer.

The detailed description of the foam layer 50 is as described above.

The second step of the method for manufacturing an artificial turf structure according to the present invention is a step of coating the lower surface of the foam layer with a polymer resin to form a support layer.

The lower surface of the foam layer 50 into which the pile 70 for artificial turf has been tufted is coated with a polymer resin to form the support layer 40, and the detailed description of the support layer 40 is as described above.

The third step of the method for manufacturing an artificial turf structure according to the present invention is a step of forming an adhesive layer on the lower surface of the support layer.

In this step, the adhesive layer 30 is formed on the lower surface of the support layer 40 so that the drainage board 20, which will be described later, is firmly attached not to be separated by a load. When forming the adhesive layer 30 on the lower surface of the support layer 40, it is important to form the adhesive layer 30 only on the edge portion and not on the entire area of the lower surface of the support layer 40 so that air holes 230 of the drainage board 20 are not covered.

The fourth step of the method for manufacturing an artificial turf structure according to the present invention is a step of attaching the upper surface of the drainage board to the lower surface of the adhesive layer.

The upper surface of the drainage board 20 is attached to the lower surface of the adhesive layer 30 not to be separated by a load. In this case, it is sufficient if the edge portion (outer portion) of the drainage board 20 is bonded to the support layer 40 so that the air holes 230 of the drainage board 20 are not blocked by the adhesive layer 30.

Matters mentioned in the pile yarn for artificial turf, method for producing a pile yarn for artificial turf, artificial turf structure, and method for manufacturing an artificial turf according to the present invention are equally applicable unless they are contradictory.

### Advantageous Effects

The artificial turf pile including paeonol and zinc oxide according to the present invention has excellent antimicrobial effects against *Escherichia coli, Staphylococcus aureus, Klebsiella pneumoniae,* and *Pseudomonas aeruginosa.* In addition, by applying a drainage board in which air holes are arranged in a V-shape, the drainage board has excellent shock absorption and drainage properties compared to existing developed drainage boards, and has excellent elasticity and durability.

Therefore, the artificial turf structure of the present invention, which includes the pile yarn for artificial turf and the drainage board having air holes arranged in a V-shape, has the effect of inhibiting the growth of microorganisms by having excellent antimicrobial properties and drainage properties. In addition, since the artificial turf structure has excellent durability, it has the effect of inhibiting the generation of dust or dirt, and since it has excellent elasticity and resilience, it has the advantage of minimizing injuries even if a person falls during exercise.

### Description of Drawings

FIG. 1 illustrates an installation section of an artificial turf of the present invention.

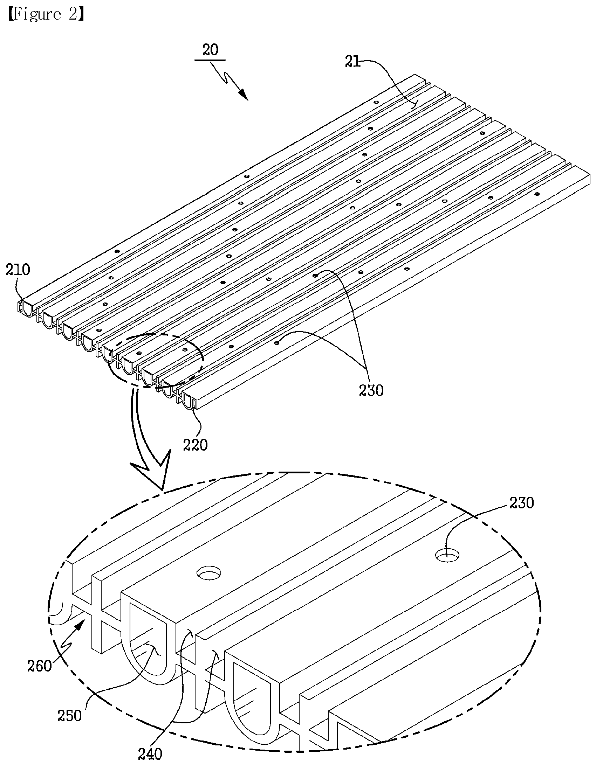

FIG. 2 illustrates the upper surface of a drainage board of the present invention.
FIG. 3 illustrates the lower surface of the drainage board of the present invention.
FIG. 4 is an enlarged view of the ventilation layer and support member of the drainage board of the present invention.
FIG. 5 illustrates the connection structure of the drainage board of the present invention.

### Best Mode

Hereinafter, the present invention will be described with reference to preferred examples. The present invention has been evaluated by applying the same to various products so that a person having ordinary skill in the art to which the present invention pertains can easily carry out the present invention. However, the present invention may be embodied in various different forms and is not limited to the examples described below.

### Examples

### Example 1

A master batch for producing an antimicrobial pile yarn for artificial turf was prepared by mixing 91 wt% of polyethylene resin (density: 0.92 g/cm³, melting index: 10 g/10 min), 3 wt% of a light stabilizer (hindered amine XT-847, BASF), 1 wt% of CaCO₃, 3.5 wt% of paeonol isolated from Moutan root bark, and 1.5 wt% of zinc oxide.

The master batch was melted at 300°C in a T-die extruder and extruded into a film. The extruded film was cooled and cut with a slitter. Thereafter, the cut film was stretched at a stretching ratio of 1:5 to 15 at a speed of 100 m/min at 95 to 120°C, and a flat yarn having 15,000 dtex was produced. A pile yarn for artificial turf was produced using the produced flat yarn.

### Example 2

A pile yarn for artificial turf was produced in the same manner as in Example 1, except that 94 wt% of polyethylene resin and 0.5 wt% of paeonol were used.

### Example 3

A pile yarn for artificial turf was produced in the same manner as in Example 1, except that 92 wt% of polyethylene resin and 2.5 wt% of paeonol were used.

### Example 4

A pile yarn for artificial turf was produced in the same manner as in Example 1, except that 90 wt% of polyethylene resin and 4.5 wt% of paeonol were used.

### Example 5

A pile yarn for artificial turf was produced in the same manner as in Example 1, except that 88 wt% of polyethylene resin and 6.5 wt% of paeonol were used.

### Comparative Example 1

A pile yarn for artificial turf was produced in the same manner as in Example 1, except that 94.5 wt% of polyethylene resin and 0 wt% of paeonol were used.

### Comparative Example 2

A pile yarn for artificial turf was produced in the same manner as in Example 1, except that 86 wt% of polyethylene resin and 8.5 wt% of paeonol were used.

**[Table 1]**

| Component | Example 1 | Comp. Example 1 | Example 2 | Example 3 | Example 4 | Example 5 | Comp. Example 2 |
|---|---|---|---|---|---|---|---|
| Polyethylene resin | 91 | 94.5 | 94 | 92 | 90 | 88 | 86 |
| Light stabilizer | 3 | 3 | 3 | 3 | 3 | 3 | 3 |
| CaCO₃ | 1 | 1 | 1 | 1 | 1 | 1 | 1 |
| Paeonol | 3.5 | 0 | 0.5 | 2.5 | 4.5 | 6.5 | 8.5 |
| Zinc oxide | 1.5 | 1.5 | 1.5 | 1.5 | 1.5 | 1.5 | 1.5 |
| Total | 100 | 100 | 100 | 100 | 100 | 100 | 100 |

### Experimental Examples

### Experimental Example 1. Antimicrobial Test

The pile yarns for artificial turf produced in the Comparative Examples and the Examples were subjected to an antimicrobial test according to the ASTM E 2149:2020 test method.

*Escherichia coli* ATCC 25922 (1.2×10⁵ CFU/mL), *Staphylococcus aureus* ATCC 6538 (1.5×10⁵ CFU/mL), *Klebsiella pneumoniae* ATCC 4352 (2.2×10⁵ CFU/mL), and *Pseudomonas aeruginosa* ATCC 15442 (1.9×10⁵ CFU/mL) were placed in contact with the pile yarns for artificial turf, produced in the Examples and the Comparative Examples, using a wrist-action shaker for 24 hours, and the bacterial reduction rate was measured based on the ASTM E 2149:2020 test method.

As a result, the pile yarns for artificial turf produced in Examples 1 to 5 and Comparative Example 2 exhibited an antimicrobial efficacy of 90% or more against the four types of strains. However, in the case of the pile yarn for artificial turf containing no paeonol, produced in Comparative Example 1 that did not contain paeonol, the antimicrobial efficacy was only about 10 to 17%, indicating that the antimicrobial effect was significantly low.

**[Table 2]**

| | Example 1 | Comp. Example 1 | Example 2 | Example 3 | Example 4 | Example 5 | Comp. Example 2 |
|---|---|---|---|---|---|---|---|
| *Escherichia coli* | > 99.9% | 17.1% | > 90% | > 99.9% | > 99.9% | > 99.9% | > 99.9% |
| *Staphylococcus aureus* | > 99.9% | 11.8% | > 90% | > 99.9% | > 99.9% | > 99.9% | > 99.9% |
| *Klebsiella pneumoniae* | > 99.9% | 11.9% | > 90% | > 99.9% | > 99.9% | > 99.9% | > 99.9% |
| *Pseudomonas aeruginosa* | > 99.9% | 10.4% | > 90% | > 99.9% | > 99.9% | > 99.9% | > 99.9% |

### Experimental Example 2. Evaluation of Quality of Artificial Turf Mats

The abrasion resistance of artificial turf mats manufactured using the pile yarns for artificial turf, produced in the Comparative Examples and the Examples, was measured by operating them 2,000 times according to the KS F 388-1: 2022 standard and measuring the weight change rate before and after abrasion. In addition, the spinning workability of the pile yarns for artificial turf produced in the Comparative Examples and the Examples was evaluated. As a result, in the case of Comparative Example 2, where the content of paeonol was excessively high, there was a problem of increased abrasion strength and decreased spinning workability.

**[Table 3]**

| | Example 1 | Comp. Example 1 | Example 2 | Example 3 | Example 4 | Example 5 | Comp. Example 2 |
|---|---|---|---|---|---|---|---|
| Abrasion strength (%) | 1.2 | 1.2 | 1.2 | 1.2 | 2.4 | 2.6 | 6.7 |
| Spinning workability | Good | Good | Good | Good | Good | Good | Decreased |

### Experimental Example 3. Evaluation of Quality Criteria for Artificial Turf Systems

For an artificial turf system including an artificial turf mat manufactured using the pile yarn for artificial turf of Example 1, the shock-absorbing drainage board 20, silica sand, and elastic chips, the quality criteria in Table 4 below were evaluated according to the KS F 388-1: 2022 standard. As a result, the artificial turf system using the pile yarn for artificial turf produced in Example 1 met the quality criteria of artificial turf systems specified in KS F 388-1: 2022.

**[Table 4]**

| **Test Items** | **Unit** | **Test results** |
|---|---|---|
| Shock absorption property | % | 64 |
| Vertical deformation | mm | 8 |
| Rolling resistance | Nm | 34 |
| Ball rebound | m | 0.67 |
| Ball rolling | m | 6 |
| Skin/surface friction | - | 0.65 |
| Water permeation performance | mm/h | 2,000 or more |
| Shock absorption - after XL stud abrasion (6,000 cycles) | % | 57 |
| Vertical deformation - after XL stud abrasion (6,000 cycles) | mm | 5 |
| Rolling resistance - after XL stud abrasion (6,000 cycles) | Nm | 47 |
| Ball rebound - after XL stud abrasion (6,000 cycles) | m | 0.96 |
| Ball rolling - after XL stud abrasion (6,000 cycles) | m | 10 |

| | | |
|---|---|---|
| * Filling amount - silica sand: 25 kg/m², elastic chips: 11 kg/m², and shock-absorbing drainage board: 15 mm | | |

### Experimental Example 4. Evaluation of Quality Criteria for Drainage Board

In the present invention, after manufacturing an shock-absorbing drainage board 20, the evaluation of quality criteria was performed according to the KS F 388-1: 2022 standard. As a result, the shock-absorbing drainage board of the present invention met the quality criteria specified in KS F 388-1: 2022.

**[Table 5]**

| **Test items** | **Test results** |
|---|---|
| Compression set (%) | 2 |
| Tensile strength (MPa) | 14.71 |
| Elongation (%) | 242 |
| Ozone resistance tensile strength (MPa) | 14.02 |
| Ozone resistance elongation (%) | 226 |
| Shock absorption (%) | 44.2 |

### Industrial Applicability

The present invention provides an artificial turf structure having excellent antimicrobial properties, shock absorption properties and drainage properties, and a method for manufacturing the same. According to the present invention, it is possible to provide a pile yarn for artificial turf that, by having antimicrobial functions against *Escherichia coli, Staphylococcus aureus, Klebsiella pneumoniae* and *Pseudomonas aeruginosa,* may prevent the occurrence of pathogens caused by contaminants and maintain a pleasant environment.

## Claims

1. An antimicrobial pile yarn for artificial turf, the antimicrobial pile yarn comprising 77 to 96 wt% of a polyethylene resin, 1 to 10 wt% of a light stabilizer, 1 to 5 wt% of calcium carbonate, and 2 to 8 wt% of a composite antimicrobial agent composed of paeonol and zinc oxide,
wherein the composite antimicrobial agent is composed of paeonol and zinc oxide mixed at a weight ratio of 0.3 to 5:1, and
wherein the antimicrobial pile yarn has antibacterial activity against *Escherichia coli, Staphylococcus aureus, Klebsiella pneumoniae* and *Pseudomonas aeruginosa.*

2. The antimicrobial pile yarn according to claim 1, wherein the paeonol is isolated from Moutan root bark.

3. An artificial turf structure, comprising:
a foam layer;
an artificial turf pile tufted into the foam layer and composed of the pile yarn according to claim 1 or 2; and
a support layer formed by coating a lower surface of the foam layer with a polymer resin.

4. The artificial turf structure according to claim 3, further comprising:
an adhesive layer connecting a lower surface of the support layer to an upper surface of a drainage board; and the drainage board attached to a lower surface of the adhesive layer.

5. The artificial turf structure according to claim 4, wherein a plurality of air holes are formed in a first horizontal member of the upper surface of the drainage board and a second horizontal member of the lower surface of the drainage board, and the plurality of air holes are arranged in a V-shape.

6. A method for producing an antimicrobial pile yarn for artificial turf, the method comprising:
a first step of mixing 77 to 96 wt% of a polyethylene resin, 1 to 10 wt% of a light stabilizer, 1 to 5 wt% of calcium carbonate, and 2 to 8 wt% of a composite antimicrobial agent composed of paeonol and zinc oxide, thereby preparing an antimicrobial master batch for producing an antimicrobial pile yarn for artificial turf; and
a second step of extruding the antibacterial master batch into a film and stretching the film, thereby producing a flat yarn;
wherein the composite antimicrobial agent is composed of paeonol and zinc oxide mixed at a weight ratio of 0.3 to 5:1, and
wherein the antimicrobial pile yarn for artificial turf has antibacterial activity against *Escherichia coli, Staphylococcus aureus, Klebsiella pneumoniae* and *Pseudomonas aeruginosa.*

7. A method for manufacturing an artificial turf structure, the method comprising:
a first step of tufting the pile yarn for artificial turf, produced by the method according to claim 6, into a foam layer;
a second step of coating a lower surface of the foam layer with a polymer resin to form a support layer;
a third step of forming an adhesive layer on a lower surface of the support layer; and
a fourth step of attaching an upper surface of a drainage board to a lower surface of the adhesive layer.
